Europäisches Patentamt

European Patent Office

Office européen des brevets

(11) Publication number: **0 284 826**
**A2**

## (12) EUROPEAN PATENT APPLICATION

(21) Application number: **88103453.2**

(22) Date of filing: **05.03.88**

(51) Int. Cl.⁴ **H01R 4/72** , H02G 15/013 , H02G 15/18

(30) Priority: **03.04.87 DE 3711321**
**27.05.87 DE 8707632 U**

(43) Date of publication of application:
**05.10.88 Bulletin 88/40**

(84) Designated Contracting States:
**AT BE CH DE ES FR GB GR IT LI LU NL SE**

(71) Applicant: **Elektro- und Gas-Armaturen-Fabrik GmbH**
**Lindenbergstrasse 1**
**D-5800 Hagen 5(DE)**

(72) Inventor: **Heuser, Helmut**
**Ringstrasse 37**
**D-5800 Hagen 8(DE)**

(74) Representative: **Patentanwälte Meinke und Dabringhaus Dipl.-Ing. J. Meinke Dipl.-Ing. W. Dabringhaus**
**Westenhellweg 67**
**D-4600 Dortmund 1(DE)**

(54) Coaxial cable connector device.

(57) A solution is provided for sealing a coaxial connector device comprising metallic housing, a contacting plate for the inner conductor and cable entry pipes provided on the housing (which can be joined to the outer jacket of inserted coaxial cables by means of heat shrinkable sleeves). The solution simplifies both the processing and handling of the device, especially in rough construction site conditions. The sealing action is increased and a number of individual elements are dispensed with, thus ensuring more economical manufacture and achieving higher electrical reliability. The device of the invention comprises a metallic housing constructed as a basic housing body (2) closed in a water and pressure impermeable manner by a housing lid (8). The device either has a plurality of cable entry pipes (3) entering the housing at an angle of other than 0 or 90° to one another and/or cable entry pipes (3) integrally formed with the housing body 2.

Fig 1

## COAXIAL CABLE CONNECTOR DEVICE

This invention relates to a device for contacting cut back coaxial cable ends. The device comprises a metallic housing and a contacting plate for the inner conductors. Cable entry pipes are provided on the housing which can be joined to the outer jacket of inserted coaxial cables by means of heat recoverable polymeric sleeves.

From DE-OS 31 24 374 or DE-OS 31 27 869 it is known for such coaxial cable connector devices, to be sealed entirely by an enclosure of shrinkable plastics material. In this case, the enclosure is shrunk both over the metallic housing which is divided in the middle and over the cable entry pipes entering the housing in parallel, the shrinkable sleeve also resting on the outer jacket of the entering cables. The known devices already have a number of advantages over other conventional solutions. One disadvantage, however, is that comparatively large quantities of shrinkable plastics material have to be used. It has also been found that, in many cases, the desired impermeability and reliability of the contacting device is not guaranteed owing to processing faults at the construction site.

The object of the invention is to provide a solution with which both the processing and the handling of the device, especially in rough construction site conditions, is simplified, the sealing action is increased and a number of individual elements are dispensed with, thus ensuring more economical manufacture and achieving higher electrical reliability.

The present invention provides a device for contacting cut back coaxial cable ends comprising:

(a) a metallic housing;

(b) a contacting plate for the inner conductors;

(c) cable entry pipes provided on the housing, which can be joined to the outer jackets of the inserted coaxial cables by means of recoverable polymeric sleeves; characterised in that:
the metallic housing comprises a basic housing body closed in a water and pressure impermeable manner by a housing lid and at least one of the following is satisfied:

(i) there are a plurality of cable entry pipes entering the side wall of the basic housing body, in a water and pressure impermeable manner, at an angle of other than 0 or 90° to one another; and

(ii) there are a plurality of cable entry pipes integrally formed with, and entering the side wall of the basic housing body.

It will be appreciated that a water and pressure impermeable metallic housing ensures allows sealing by way of shrinkable plastics films to be completely dispensed with for that part of the device.

In preferred embodiments the cable entry pipes are located at an angle of other than 0 or 90° to one another. This construction on the basic housing body allow them to be sealed relative to the entering cables more easily. Preferably they are located at 10 - 80° from each other, especially 20 - 70° from each other. If a piece of heat recoverable sleeve, e.g. shrinkable tubing, is used to make an impermeable connection between a cable entry pipe on the one hand and outer surface of the entering cable on the other hand, the fitter applying the heat, by for example a flame, can guide the flame far more easily than if, for example, two parallel pipes are arranged on a housing wall, since there is a great deal more room for the heating flame in the case of cable entry pipes that are at an angle to one another. This guards against the danger of, for example, pipes that have already been shrunk being subsequently subjected to heat, when an adjacent pipe is heated which can result in the sealing action being impaired. It also guards against shrinkable coverings that have not yet been shrunk beginning to shrink prematurely, before an inserted cable has been provided.

If, on the other hand, a mechanical seal is to be made between the cable entry pipe and an inserted coaxial cable, for example by a clamping/sealing screw connection, the use of an appropriate tool is very much easier in this case, compared to parallel cable entry pipes, also because the free outer ends of the cable entry pipes are spaced relatively far apart which, as a rule, greatly simplifies manipulation.

The housing wall carrying the cable entry pipes may be any shape, for example round, elliptical, hexagonal, octagonal or polygonal in plan view. Regular hexagonal, octagonal or polygonal housings, in particular, enable a corresponding regular orientation of the cable entry pipes at an angle to one another. This is also true, of course, to a very special degree of a housing that is round in plan view.

In preferred embodiments the cable entry pipes are integrally formed with the basic housing body. The integral entry of the cable entry pipes ensures that no joins extend into the pipes and, therefore, additional seals such as heat shrinkable films can be dispensed with in this region.

Preferably the housing is constructed as a basic body of an electrically conductive material having a lid.

For preferred embodiments with integral cable entry ports, the basic body is preferably manufactured in a hot-pressing process. It has been found that this method of manufacture brings with it special advantages. For example, CuZn39 material can be used to manufacture the housings. For this, the latter material is pre-heated to about 750°C and placed between two mould halves which are then pressed towards each other with a force of, for example, about 500 tonnes. The cable entry pipes can either remain as solid elements which are later drilled out or may be constructed as at least partially hollow-pressed pipes.

Alternatively, the housing may be manufactured according to a casting technique.

Where the cable entry ports are not integrally formed with the housing, a water and pressure impermeable connection between lid and basic housing body can be obtained by connecting the lid to the housing body by glueing or soldering.

It has already been mentioned that the cable entry pipes may be provided with shrinkable pipes of shrinkable plastics material. This can be done at the factory, i.e. the individual cable entry pipes can be equipped with pre-shrunk shrinkable sleeves.

To render possible easier, more rapid and better mounting of the cables in the housing the cable entry pipes are preferably equipped with cable connecting plugs as adaptors. This is especially recommended when the same sized housings are to be used for connecting coaxial cables of differing cross-section. Where adapters are used, the cable entry pipe can always be led into the housing in the same manner adapted to the largest available outer diameter of an entering coaxial cable. Cable connecting plugs can then be added to adapt the cable entry pipes to entering coaxial cables of smaller outer diameter. The cable connecting plugs are preferably pre-plugged onto those cables having a smaller outer diameter or pre-inserted into the cable entry pipes into which they are to be fitted.

An especially advantageous construction of the cable connecting plugs consists of their having (a) a central plug contact for the inner conductor of the coaxial cable, which plug contact is hollow at least in regions, and (b) in a plastics body, contact elements for contacting between the outer conductor of the coaxial cable and the conductive surface of the cable entry pipes extending from the housing.

Preferably the plug pin for the inner conductor is held in an approximately cylindrical plastics body on the cable plug and the access bore for the inner conductor of the coaxial cable to be contacted is provided with a locking element that points in a direction opposed to the direction of withdrawal of the inner conductor.

Preferably the cable plug is equipped with an outer stop ring to define the depth of insertion of the cable plug into the device.

In preferred embodiments support shoulders for supporting an electronic contact plate are integrally provided in the basic housing body. This construction has the advantage that the electronic plate can later be installed very accurately to size because the support shoulders are already very accurately adjustable with regard to size.

These holders or support shoulders preferably form, simultaneously, the earth contact for the plates. The earth contacts can, therefore, be obtained very precisely. This contrasts with screw earth connections, where precise connection is very difficult.

In preferred embodiments, at least regions of the outer surface of the housing are additionally provided with a protective layer. The outer surface may, for example, be zinc-plated, or alternatively, in a sintering process, be plastics-coated, lacquered, provided with appropriate prints and so on.

Is is advantageous if the coating, especially if it is a plastics coating, on the cable entry pipes has, at least partially, blank spaces to enable shrinkable tubes to be shrunk directly onto the metallic surface of parts of the cable entry pipes. Since such shrinkable tubes are generally coated with hot-melt adhesives, it is advantageous to contact at least parts of the hot-melt adhesive coating directly with the metal since, frequently, better adhesion can be achieved here than on plastics surfaces. Embodiments of the present invention are now described, by way of example with reference to the accompanying drawings, wherein:

Figure 1 shows a section through a device according to the invention;

Figures 2a and 2b are alternative plan views of the device of Figure 1 taken along arrow II in Figure 1;

Figure 3 is an enlarged sectional view of a cable connecting plug;

Figure 4 shows a cable entry pipe with a modified exemplary embodiment of a connecting element, and

Figures 5 - 7 are plan views of possible housing shapes according to the invention shown on a smaller scale.

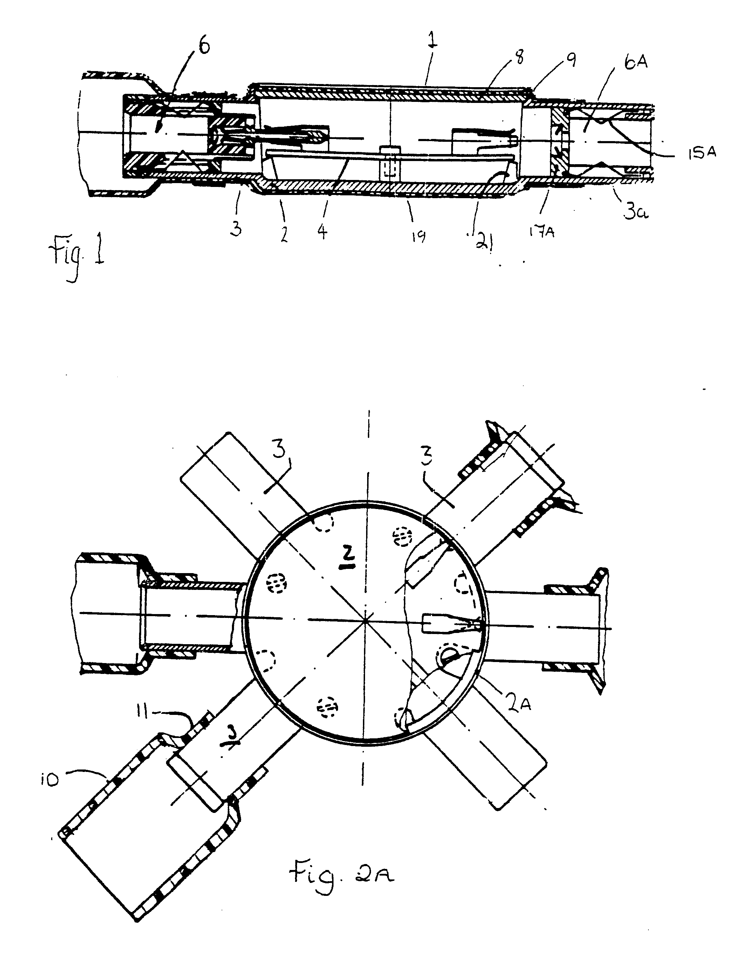

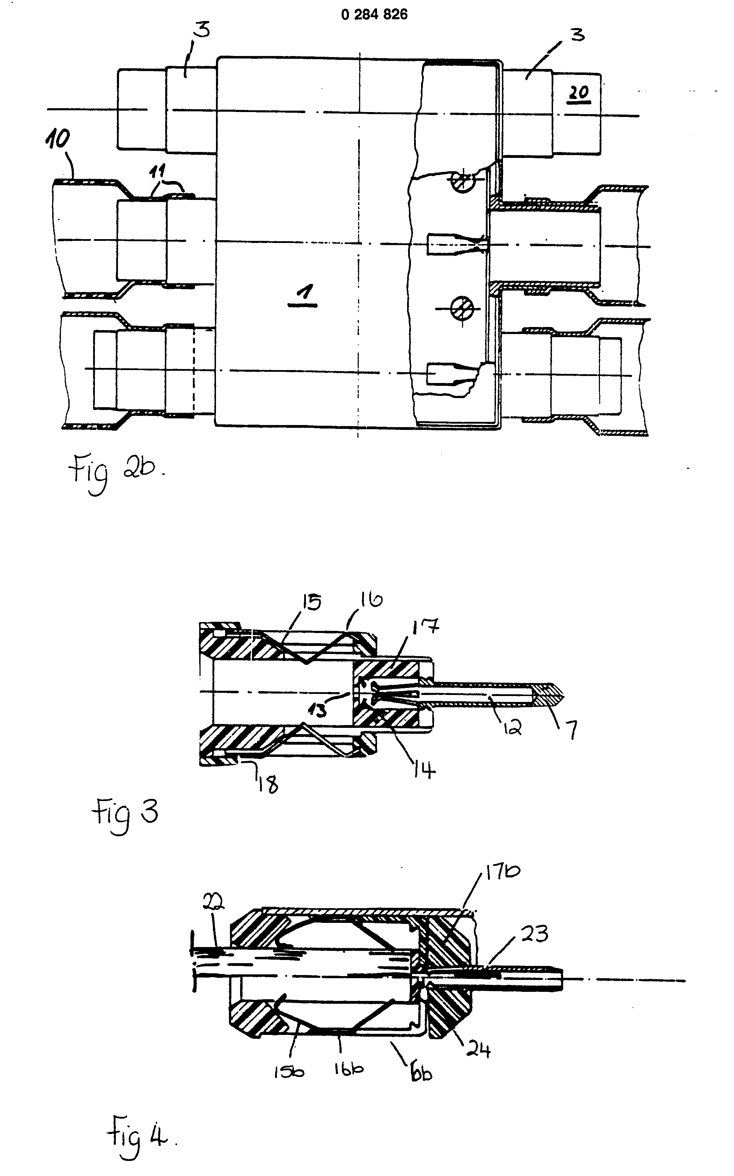

The device generally designated 1 for contacting coaxial cables ends which are not shown consists, in the example shown a basic housing body 2, having cable entry pipes 3 integrally formed thereon, which may be circular in plan view as shown in Figure 2a or rectangular in plan view as shown in Figure 2b. In the interior of the basic housing body 2 there is a contacting plate 4, preferably an electronic contacting plate, with contacts 5 for receiving the inner conductor either of a coaxial cable end or a cable connecting plug, generally designated 6, which is shown on the left in Figure 1 and on an enlarged scale in Figure 3. The inner conductor contact of the cable plug 6 bears the reference numeral 7 in Figure 3. The connection plate can be provided with further electrical or electronic components, this not being specifically relevant here, however.

A feature that is essential to the invention is that the lid, designated 8, which closes the basic housing body 2 is fastened to the latter in a water and pressure impermeable manner, for example is soldered thereto, this being indicated by reference numeral 9.

In preferred embodiments the cable entry pipes 3 are located at an angle to one another, as will be seen especially clearly from Figure 2a, 5 and 6. In addition, they are equipped with short pieces 10 of shrinkable tubing which may, for example, already be shrunk on at the factory. This shrunk-on region is designated 11 in Figures 2a and 2b. The diameter of the cable entry pipes 3 can be selected so as to correspond to the largest outer diameter of a coaxial cable customarily to be contacted or connected there, or to the outer diameter of the cut back coaxial cable end, i.e. to that of the outer conductor.

If cut back coaxial cable ends having a smaller outer diameter are then inserted therein, the difference in dimensions is bridged by cable connecting plugs 6. Referring to Figure 3, such a cable connecting plug 6 consists of a central contact pin 7 provided with a blind bore for the inner conductor which is inserted through a central opening 13 into the blind bore 12 and is prevented from being pulled out by a small locking element 14.

The contacts for the outer conductor are constructed as contact springs 15 distributed over the circumference, which on the one hand rest on the outer circumference of the outer conductor and on the other hand contact the cable entry pipe 3 with at least one contact point 16 and thus make an electrically conductive connection in an especially favourable manner. Contact springs are basically known: see, for example, FR-PS 1 573 851, Figure 1.

The cable entry pipe 3a shown on the right in Figure 1 has a cable connecting plug 6a of a somewhat different construction, namely without the contact pin 7 for the inner conductor, i.e. in this case the inner conductor of the inserted cable is received directly by the contact element 5 on the plate 4 whilst the outer conductor is contacted by way of the described contact springs 15a. In both cases, there is provided for holding the locking element 14 a plastics body 17 or a corresponding plastics disc 17a which carries this locking element 14.

In order to define exactly the depth of insertion of the cable connecting plugs 6 they are provided on their outer circumference with a stop shoulder 18 which need not necessarily be formed circumferentially but may also consist of individual stop projections.

As shown in the Figures, the housing 1, including at least parts of the cable entry pipes 3, may be provided with a plastics coating 19, which, however, leaves free at least the forward regions, designated 20, of the cable entry pipes 3 so that the shrinkable tube pieces 10 can be shrunk directly onto the metallic surface there as indicated in Figure 1 and 2b.

Referring to Figure 1, reference numeral 21 denotes support shoulders for receiving the contacting plate 4, which render possible very precise positioning of this preferably electronic contacting plate and a very good electrical connection with the basic housing body 2. These support shoulder 21 are manufactured integrally with the basic housing body 2.

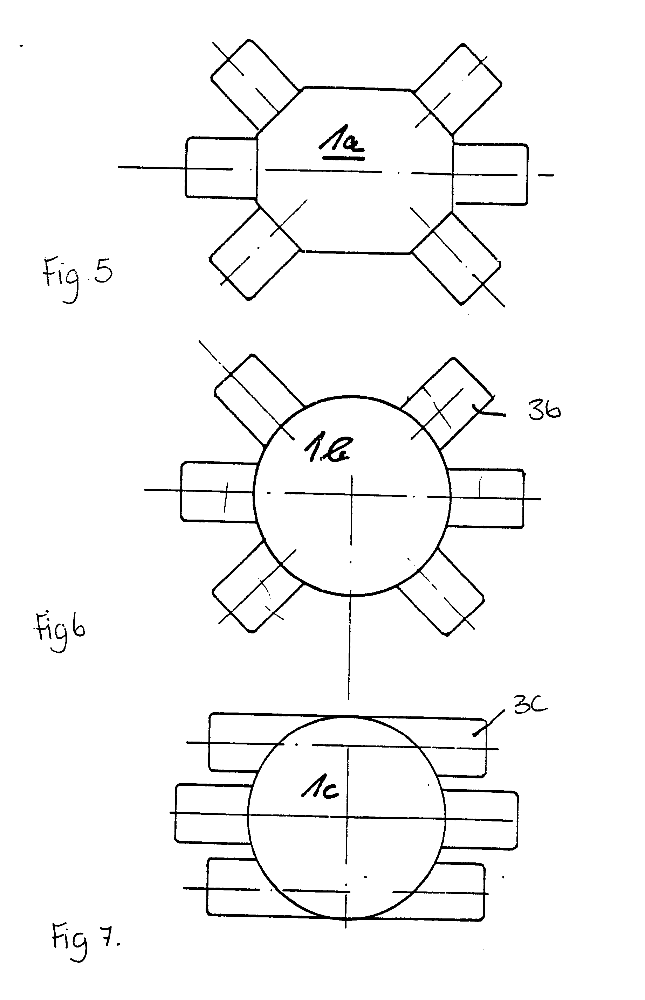

Figure 4 shows another construction of a cable entry plug 6b, with a coaxial cable inserted in the upper half of the Figure and with no such coaxial cable in the lower half of the Figure. the parts of the plug 6b corresponding to those in Figure 3 bear the same reference numerals merely provided with a b. The inserted coaxial cable is designated 22, the inner conductor bears the reference numeral 23 whilst a clamping disc which secures the inner conductor 23 against axial displacement bears the reference numeral 24.

Figure 5 - 7 show different shapes of the housing in plan view, Figure 5 showing in plan view a polygonal housing 1, Figure 6 a round housing 1b having cable entry pipes 3b each entering perpendicular to the surface and therefore being at an angle to one another of other than 0 or 90°, whilst Figure 7 shows a housing 1c which is also round but has cable entry pipes 3c arranged parallel to one another.

The described exemplary embodiments of the invention can, of course, still be modified in various respects without departing from the basic idea. It has already been mentioned that the side wall, designated 2a, of the basic housing body 2 can differ from the circular plan-view shape shown in Figure 2. The shape can equally be elliptical or polygonal. Also the material both of the basic housing body and of the lid is subject only to the limitation that it should advantageously be of electrically conductive construction, at least as far as the cable entry pipes and the transition to the contact plate are concerned.

**Claims**

1. A device for contacting cut back coaxial cable ends comprising: (a) a metallic housing; (b) a contacting plate (4) for the inner conductors; (c) cable entry pipes (3) provided on the housing (2), which can be joined to the outer jackets of the inserted coaxial cables by means of recoverable polymeric sleeves (11); characterised in that the metallic housing comprises a basic housing body (2) closed in a water and pressure impermeable manner by a housing lid (8) and at least one of the following is satisfied:

(i) there are a plurality of cable entry pipes (3) entering the side wall of the basic housing body (2) at an angle of other than 0 or 90° to one another, in a water and pressure impermeable manner,

(ii)there are a plurality of cable entry pipes integrally formed with, and entering, the side wall of the basic housing body (2).

2. A device according to claim 1, characterised in that the wall (2a) carrying the cable entry pipes (3) is constructed to be round, elliptical, hexagonal, octagonal or polygonal in plan view.

3. A device according to claim 1 or 2, characterised in that the cable entry pipes (3) are equipped with cable connecting plugs (6) as adapters.

4. A device according to claim 3, characterised in that the cable connecting plugs (6) comprise (a) a central plug contact (7) for the inner conductor of the coaxial cable, which plug contact is hollow at least in regions, and, (b)in a plastics body, contact elements (15) for the contacting between outer conductor and inner surface of the cable entry pipes (3).

5. A device according to claim 3 or 4, characterised in that a plug pin (7) for the inner conductor of the coaxial cable is held in an approximately cylindrical plastics body on the cable connecting plug (6), and the access bore (13) for the inner conductor of the coaxial cable to be contacted is provided with a locking element (14) that points in a direction opposed to the direction of withdrawal of the inner conductor.

6. A device according to any of claims 3 - 5 characterised in that the cable connecting plug (6) is equipped with an outer stop ring (18) to define the depth of insertion of the cable plug (6) into the device (1).

7. A device according to any preceding claim, characterised in that the housing is constructed as a basic body (2) of an electrically conductive material having a lid, which basic body is manufactured in a hot-pressing process.

8. A device according to any preceding claim, characterised in that support shoulders (21) for receiving an electronic contacting plate (4) are provided integrally in the basic housing body (2).

9. A device according to one of the preceding claims, characterised in that at least regions of the outer surface of the housing (2,8) are additionally provided with a protective layer (19), which is preferably a plastics coating (19).

10. A device according to claim 9, characterised in that the plastics coating (19) on the cable entry pipes has, at least partially, blank spaces (2) to enable shrinkable tubes (10) to be shrunk directly onto the uncoated, preferably metallic, surface of parts of the cable entry pipes (3).

Fig. 1

Fig. 2A

Fig 2b.

Fig 3

Fig 4.

Fig. 5

1a

Fig 6

1b

3b

Fig 7.

1c

3c